# EUROPEAN PATENT APPLICATION

(11) **EP 1 974 797 A1**
(43) Date of publication of application: **01.10.2008**
(21) Application number: 07021084.4
(22) Date of filing: 29.10.2007
(51) Int. Cl.: B01D 53/94, B28B 11/04, B28B 19/00, C04B 41/45, C04B 41/87, F01N 3/28

(54) **Catalyst support and method of manufacturing catalyst supporter**

(30) Priority: 30.03.2007 WO PCT/JP2007/057255
(71) Applicant: IBIDEN CO., LTD., Ogaki-shi Gifu 503-8604 (JP)
(72) Inventor: Ido, Takahiko, Ibi-gun Gifu 501-0695 (JP); Ohno, Kazushige, Ibi-gun Gifu 501-0695 (JP)
(74) Representative: HOFFMANN EITLE

(57) **Abstract**

The present invention relates to a catalyst supporter having a honeycomb structure whose cells extending in longitudinal directions thereof are partitioned by a cell wall, and a coat layer placed on a peripheral portion of the honeycomb structure, characterized in that a thickness D of the coat layer is within a range of 2 mm < D ≤ 10 mm.

## Description

### BACKGROUND OF THE INVENTION

### 1. Field of the Invention

The present invention relates to a catalyst supporter and a method of manufacturing a catalyst supporter.

### 2. Description of the Related Art

Conventionally, each kind of exhaust gas processing device for an internal combustion engine of, for example, a vehicle, construction equipment or the like has been proposed and has been in practical use. A general exhaust gas processing device has a structure such that a casing made of, for example, a metal and the like is provided on the intermediate of an exhaust pipe connected to an exhaust gas manifold of an engine and a honeycomb structure is arranged therein. The honeycomb structure constitutes a catalyst supporter which converts a harmful gas component from exhaust gas through a catalytic reaction.

The catalyst supporter is manufactured by, for example, making a catalyst supporting layer such as γ-alumina and a catalyst such as platinum be supported on a cell wall of a low expansion cordierite-based honeycomb structure. Harmful gas such as CO, HC and NOx which is contained in exhaust gas is converted therefrom due to the catalyst placed on the cell wall.

In such a catalyst supporter having a honeycomb structure, it is necessary to increase a probability of contact between exhaust gas and a catalyst (for example, a noble metal) in order to improve the exhaust gas cleaning performance thereof. As a catalyst supporter which addresses this problem, honeycomb structures are known which are composed of a high specific surface area material such as alumina and inorganic fibers so as to increase the specific area thereof (for example, JP-A-2005-218935 and JP-A-2005-349378).

As described above, it is preferable that the specific surface area of a honeycomb structure is large, from the viewpoint of the exhaust gas converting performance of the catalyst supporter. However, when the specific surface area of a honeycomb structure is increased as in JP-A-2005-218935 and JP-A-2005-349378, the substrate thereof cannot sufficiently be sintered, and therefore, the strength of a catalyst supporter after the completion thereof may frequently be reduced. When the strength of a catalyst supporter is low, the catalyst supporter may have been damaged by a stress applied from the peripheral side thereof (that is, the inside surface of a casing) at the time of insertion of the catalyst supporter into the casing or practical use thereof.

In JP-A-2005-218935 and JP-A-2005-349378, a coat layer is placed on the peripheral surface of a honeycomb structure in ordinary practice. Therefore, it is considered that the strength (isostatic strength) thereof against a compressive stress from the peripheral side thereof may be increased by forming the coat layer thickly, for solving the problem described above.

However, a coat layer is commonly formed by applying a raw material paste which later becomes the coat layer, on the surface of a honeycomb structure on which it is placed, that is, the peripheral surface thereof by using, for example, application means such as a spatula, and subsequently drying and hardening it. Therefore, it is necessary to apply a raw material paste on the peripheral surface of a honeycomb structure thickly, in order to form a coat layer thickly. However, since a raw material paste has a certain fluidity, it is very difficult to apply the raw material paste uniformly if it has a certain thickness or greater. For example, when a raw material paste has a thickness greater than a certain one, the raw material paste at a portion which contacts application means, simply flows to portions around it even if a further raw material paste is superposed on the surface, and it is very difficult to further increase the thickness of the raw material paste at an intended position.

Therefore, according to a conventional method of placement of a paste for coat layer, a coat layer cannot be so thickly formed (commonly, approximately 1 mm at a maximum) and it is difficult to increase the isostatic strength of a honeycomb structure due to a coat layer.

### SUMMARY OF THE INVENTION

The present invention has been made under such background and the object thereof is to provide a catalyst supporter having a high isostatic strength thereof.

According to the present invention, there is provided a catalyst supporter having a honeycomb structure whose cells extending in longitudinal directions thereof are partitioned by a cell wall, and a coat layer placed on a peripheral portion of the honeycomb structure, characterized in that a thickness D of the coat layer is within a range of 2 mm < D ≤ 10 mm.

Particularly, it is preferable that the thickness D of a coat layer is within a range of 3 mm ≤ D ≤ 6 mm.

Herein, it is preferable that the cell wall is composed of an inorganic particle and an inorganic fiber and/or a whisker.

Also, the honeycomb structure may have plural pillar-shaped honeycomb units and a bonding layer which bonds the honeycomb units to one another.

Also, the catalyst supporter may be cylindrical shape.

Also, a catalyst may be supported on the cell wall.

Also, the catalyst may include platinum.

Also, according to the present invention, there is provided a method of manufacturing a catalyst supporter which has a honeycomb structure whose cells extending in longitudinal directions thereof are partitioned by a cell wall and a coat layer placed on a peripheral portion of the honeycomb structure, which comprises a step of preparing plural pillar-shaped honeycomb units, a step of bonding the plural pillar-shaped honeycomb units by interposing a bonding layer to manufacture the honeycomb structure, and a step of placing a raw material paste for coat layer, on a peripheral portion of the honeycomb structure, and drying and hardening the raw material paste for coat layer to form a coat layer whose thickness D is within a range of 2 mm < D ≤ 10 mm, characterized in that the step of forming a coat layer whose thickness D is within a range of 2 mm < D ≤ 10 mm has a step of placing a housing which covers a peripheral surface of the honeycomb structure, at an outside of the honeycomb structure and filling a space whose shape is defined between the housing and the peripheral surface of the honeycomb structure with the raw material paste.

According to the present invention, it is possible to provide a catalyst supporter having a high isostatic strength thereof.

### BRIEF DESCRIPTION OF THE DRAWINGS

Fig. 1 is a perspective view which schematically shows one example of a catalyst supporter according to the present invention.
Fig. 2 is a perspective view which schematically shows one example of a honeycomb unit constituting the catalyst supporter of Fig. 1.
Fig. 3 is schematic cross-section diagram of the catalyst supporter of Fig. 2 along a line A-A.
Fig. 4 is a cross-section diagram which schematically shows one example of an exhaust gas processing device on which a catalyst supporter according to the present invention is placed.
Fig. 5 is a diagram showing one example of flow of manufacturing a catalyst supporter according to the present invention.
Fig. 6 is a perspective view of a honeycomb structure manufactured by another method.
Fig. 7 is a diagram which schematically shows one example of a device of placing "a paste for thick film coat layer".

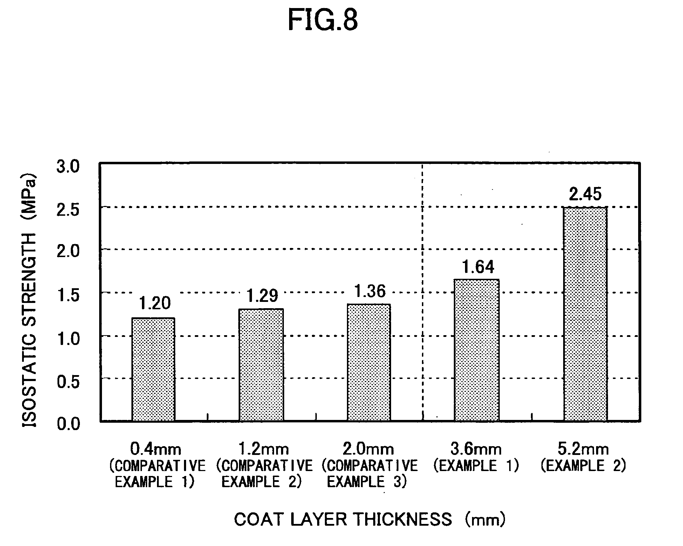

Fig. 8 is a graph showing the result of measurement of the isostatic strength of each catalyst supporter versus the thickness of a coat layer thereof.

### DETAILED DESCRIPTION OF THE PREFERRED EMBODIMENTS

Some embodiment(s) of the present invention will be described with reference to the drawings below.

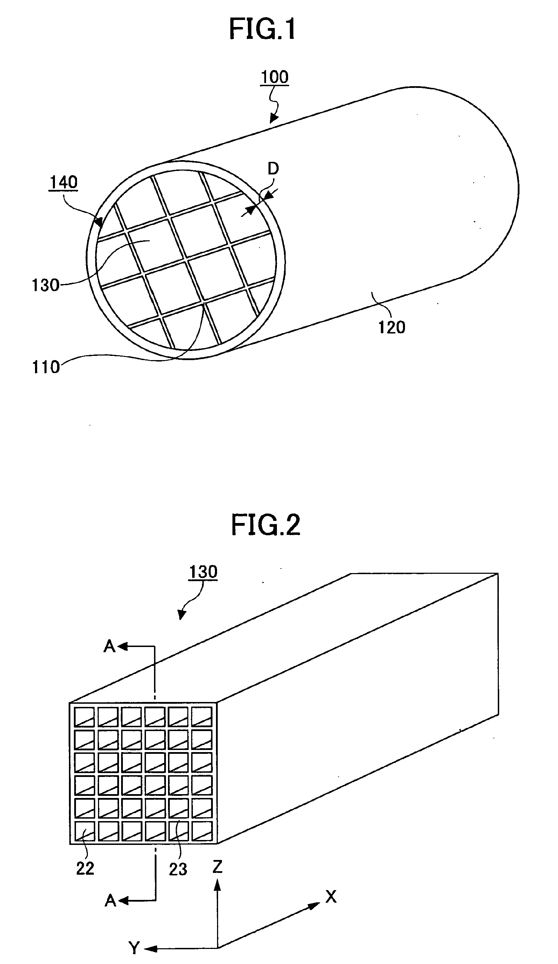

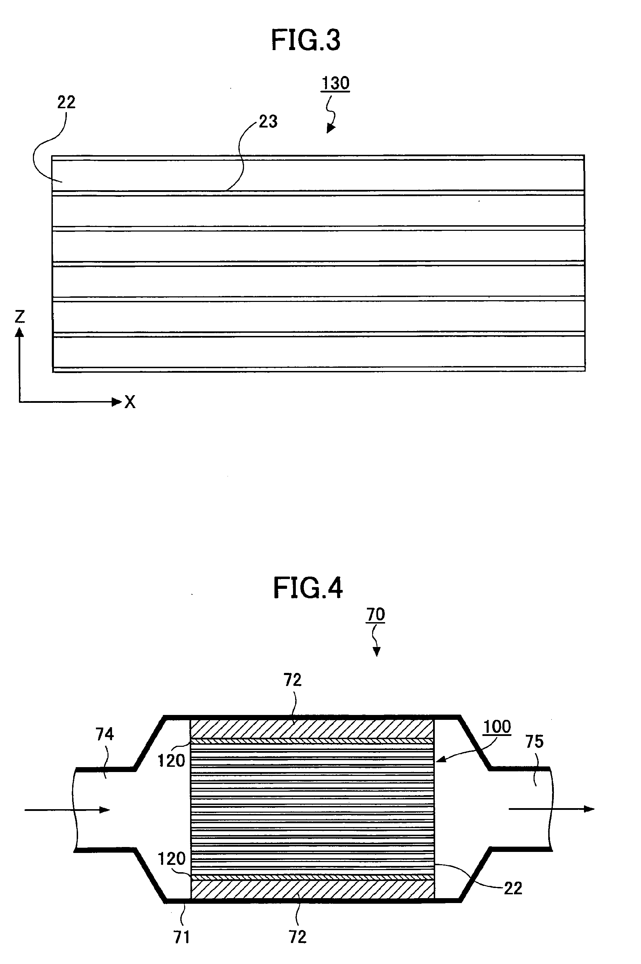

Fig. 1 schematically shows one example of a catalyst supporter according to the present invention. Also, Fig. 2 schematically shows one example of a honeycomb unit, which is a base unit of a honeycomb structure constituting the catalyst supporter. Furthermore, Fig. 3 shows a schematic diagram of an A - A cross section of the honeycomb unit of Fig. 2.

As shown in Fig. 1, a catalyst supporter 100 has a honeycomb structure 140 having two aperture sides and a peripheral portion connecting both aperture sides and a coat layer 120 placed on the peripheral portion of the honeycomb structure 140. The coat layer 120 is placed over the full length of the honeycomb structure 140.

The honeycomb structure 140 is provided, for example, by bonding a plural number (16, 4 columns for each of vertical and horizontal ones, in the example of Fig. 1) of pillar-shaped ceramic honeycomb units 130 shown in Fig. 2 by interposing a bonding layer 110 and subsequently cutting the peripheral portion into a predetermined shape (cylindrical shape, in the example of Fig. 1).

As shown in Fig. 2 and Fig. 3, the honeycomb unit 130 extends in the longitudinal directions thereof and has plural cells 22 which are opened at both end faces thereof and a cell wall 23 which partitions the cells. On the cell wall 23, for example, a noble metal catalyst such as platinum is supported. Therefore, when the catalyst supporter is used in practice, exhaust gas flowing into one end portion of any cell 22 of the honeycomb unit 130 necessarily contacts the catalyst at the time of passing through the cell, and thereby, a harmful component (for example, CO, HC, and NOx) contained in the exhaust gas is converted. Also, the converted exhaust gas is emitted from the other end portion of the cell 22.

Herein, the catalyst supporter 100 according to the present invention is characterized in that the coat layer 120 has a thickness more than 2 mm.

When the coat layer of the catalyst supporter is thus formed thickly, the coat layer placed to adjust the shape of the periphery of the catalyst supporter can commonly contribute to improve the strength of the catalyst supporter. Therefore, in a catalyst supporter according to the present invention, the strength of the catalyst supporter, particularly, the isostatic strength thereof, is improved. Herein, an isostatic strength is a compressive breaking load when an isotropic hydrostatic pressure load is applied to a catalyst supporter so as to cause breaking thereof, and is defined in JASO Standard M 505 - 87, which is a standard for automobiles and is published by the Society of Automotive Engineers of Japan Inc. Therefore, according to the present invention, it is possible to improve the strength of the catalyst supporter 100 while the specific surface area of the honeycomb structure is kept at a conventional or even greater value.

It is preferable that the thickness D of the coat later 120 is within a range of 2 mm < D ≤ 10 mm. If the thickness D of the coat layer 120 is more than 10 mm, the total weight of the catalyst supporter is large and the effective surface area of the honeycomb unit which is utilized for converting by the catalyst (the cross-section area of a plane perpendicular to the longitudinal directions thereof) is significantly reduced, as comparison is made in cases where the dimension of the periphery of the catalyst supporter is constant. Particularly, when the thickness D of the coat layer 120 is within a range of 3 mm ≤ D ≤ 6 mm, a catalyst supporter having a very good strength thereof can be obtained as described below, while the effective surface area of the honeycomb unit which is utilized for converting by the catalyst is not so reduced.

In a catalyst supporter according to the present invention, the specific surface area of a honeycomb structure is not particularly limited, and particularly, is more preferably in a range of 25,000 m²/L to 70,000 m²/L with respect to a unit volume of the catalyst supporter. In the case of a catalyst supporter according to the present invention, the isostatic strength thereof is higher compared to a honeycomb structure with a similar specific surface area. Herein, the specific surface area of a honeycomb structure is a value measured by a one-point method using a cylindrical sample with a diameter of 15 mm and a height of 15 mm in conformity with JIS-R-1626 (1996) provided by the Japanese Industrial Standards.

The composition of a honeycomb unit is not particularly limited and is desirably provided by containing an inorganic particle(s), an inorganic fiber(s) and/or a whisker(s). The specific surface area is increased by the inorganic particle(s) and the strength of the honeycomb unit is increased by the inorganic fiber(s) and/or the whisker(s).

For the inorganic particle, a particle is desirable which is made of, for example, alumina, silica, zirconia, titania, ceria, mullite, zeolite and the like. These particles may be used singularly or two or more kinds of them may be used in combination. Also, among these, an alumina particle and a ceria particle are particularly desirable.

For the inorganic fiber and the whisker, an inorganic fiber and/or whisker are/is desirable which are/is made of, for example, alumina, silica, silicon carbide, a silica-alumina, a glass, potassium titanate, aluminum borate and the like. These may be used singularly or two or more kinds of them may be used in combination. Among the inorganic fibers and/or the whiskers, an aluminum borate whisker is more desirable.

Herein, in the present specification, an inorganic fiber and/or whisker refer(s) to one(s) whose average aspect ratio (length / diameter) is more than 5. Also, a desirable average aspect ratio of the inorganic fiber(s) and/or whisker(s) is 10 to 1,000.

In regard to the quantity of the inorganic particle(s) contained in the honeycomb unit, a desirable lower limit thereof is 30 % by weight, a more desirable lower limit thereof is 40 % by weight, and a further desirable lower limit thereof is 50 % by weight. On the other hand, a desirable upper limit thereof is 97 % by weight, a more desirable upper limit thereof is 90 % by weight, a further desirable upper limit thereof is 80 % by weight, and a particularly desirable upper limit thereof is 75 % by weight.

If the content of an inorganic particle(s) is less than 30 % by weight, the quantity of an inorganic particle(s) which contribute(s) to an increase of the specific surface area is relatively low, and therefore, the specific surface area as for the honeycomb structure may be so small that a catalytic component cannot be highly dispersed when the catalytic component is supported. On the other hand, if it is more than 97 % by weight, the quantity of an inorganic fiber(s) and/or whisker(s) which contribute(s) to an increase of the strength is relatively low, and therefore, the strength of the honeycomb structure is reduced.

In regard to the total quantity of the inorganic fiber(s) and/or whisker(s) contained in the honeycomb unit, a desirable lower limit thereof is 3 % by weight, a more desirable lower limit thereof is 5 % by weight, and a further desirable lower limit thereof is 8 % by weight. On the other hand, a desirable upper limit thereof is 70 % by weight, a more desirable upper limit thereof is 50 % by weight, a further desirable upper limit thereof is 40 % by weight, and a particularly desirable upper limit thereof is 30 % by weight.

If the content of an inorganic fiber(s) and/or whisker(s) is less than 3 % by weight, the strength of the honeycomb structure is reduced, and if it is more than 50 % by weight, the quantity of an inorganic particle(s) which contribute(s) to an increase of the specific surface area is relatively low, and therefore, the specific surface area as for the honeycomb structure may be so small that a catalyst component cannot be highly dispersed when the catalyst component is supported.

Also, it is desirable that the honeycomb unit is manufactured by using a raw material composition which is a mixture containing the inorganic particle(s), the inorganic fiber(s) and/or the whisker(s) and an inorganic binder. When such a raw material composition containing an inorganic binder is used, a honeycomb unit with a preferable strength thereof can be obtained even if the temperature for sintering a raw molded body is lowered.

For the inorganic binder, for example, an inorganic sol, a clay-type binder or the like can be used, and for specific examples of the inorganic sol, there can be provided, for example, an alumina sol, a silica sol, a titania sol, a water glass and the like. Also, for the clay-type binder, there can be provided, for example, double-chain structure-type clays such as white clay, kaoline, montmorillonite, sepiolite and attapulgite, and the like. These may be used singularly or two or more kinds of them may be used in combination.

Among these, desirable is at least one kind selected from the group consisting of an alumina sol, a silica sol, a titania sol, a water glass, sepiolite, and attapulgite.

In regard to the quantity of an inorganic binder contained in the raw material composition, as a solid content, relative to the total quantity of the solid contents of the inorganic particle(s), inorganic fiber(s) and/or whisker(s) and inorganic binder contained in the raw material composition, a desirable lower limit thereof is 5 % by weight, a more desirable lower limit thereof is 10 % by weight, and a further desirable lower limit thereof is 15 % by weight. On the other hand, a desirable upper limit thereof is 50 % by weight, a more desirable upper limit thereof is 40 % by weight, and a further desirable upper limit thereof is 35 % by weight.

If the quantity of the inorganic binder is less than 5 % by weight, the strength of a manufactured honeycomb structure may be low, and, on the other hand, if the quantity of the inorganic binder is more than 50 % by weight, the moldability of the raw material composition tens to be degraded.

The thickness of a cell wall 23 of the honeycomb unit 130 is not particularly limited, and a desirable lower limit thereof is 0.1 mm in terms of the strength while a desirable upper limit thereof is 0.4 mm in terms of gas converting.

Meanwhile, in the catalyst supporter 100 according to the present invention, the coat layer 120 contains an inorganic particle(s) and an inorganic fiber(s) similarly to the honeycomb unit 130, and may further contain an inorganic binder. For the inorganic particle(s), inorganic fiber(s) and inorganic binder contained in the coat layer 120, ones similar to those of the honeycomb unit 130 described above can be used. Additionally, the details of a coat layer are described below.

Also, in the catalyst supporter 100 according to the present invention, materials similar to those of the coat layer 120 are used for the bonding layer 110. However, the materials of the bonding layer 110 may be different from those of the coat layer 120.

The shape of the catalyst supporter 100 according to the present invention may be any shape. For example, the shape of a catalyst supporter may be a cylindroid shape, a rectangular pillar shape or the like beside a cylindrical shape as shown in Fig. 1.

Such a catalyst supporter according to the present invention can be used for, for example, an exhaust gas processing device of a vehicle.

Fig. 4 schematically shows one example of an exhaust gas processing device 70 in which a catalyst supporter 100 according to the present invention is installed.

As shown in Fig. 4, an exhaust gas processing device 70 is mainly composed of a catalyst supporter 100, a metal casing 71 for containing the catalyst supporter 100, and a holding sealing member 72 for holding the catalyst supporter 100 at an appropriate position which member is arranged between the catalyst supporter 100 and the casing 71. Also, an introduction pipe 74 for introducing exhaust gas emitted from an internal combustion engine such as an engine is connected to one end portion (introduction portion) of the exhaust gas processing device 70 and an exhaust pipe 75 for emitting exhaust gas is connected to the other end portion (exhaust portion) of the exhaust gas processing device 70. In the figure, an arrow indicates the flow of exhaust gas.

The exhaust gas emitted from an internal combustion engine such as an engine is introduced into the casing 71 through the introduction pipe 74 and flows into a cell 22 from one end face of the catalyst supporter 100 which faces the introduction pipe 74. The exhaust gas flowing into a honeycomb structure 140 reacts with a catalyst in a process of passing through the cell 22, and accordingly, harmful components such as CO, HC and NOx are converted. Subsequently, the exhaust gas is emitted from the exhaust gas processing device through the other end face of the catalyst supporter 100 and finally emitted to the outside through the exhaust pipe 75.

In such an exhaust gas processing device 70, the catalyst supporter 100 is composed of a honeycomb structure having a high specific surface area similar to the conventional one, and therefore, exhibits a good converting characteristic. Also, since a coat layer 120 in the catalyst supporter 100 is provided with a thickness sufficient to increase the isostatic strength of the catalyst supporter 100, the catalyst supporter 100 exhibits a good strength against a compressive stress from the peripheral portion thereof which is applied from the side of the casing 71 or holding sealing member 72. Therefore, according to the present invention, breaking of a honeycomb structure in use is avoided although it has a high specific area thereof.

Additionally, an example of a catalyst supporter has been described in the above descriptions which is formed of a honeycomb structure (so-called "bonding-type honeycomb structure") as a basic structure which is provided by bonding plural honeycomb units 130 by interposing a binding layer 110, as shown in Fig. 1. However, it would be obvious for a person skilled in the art to be able to also apply the present invention to a catalyst supporter beside the above-mentioned one which supporter is formed of a honeycomb structure (so-called "one unit-type honeycomb structure") as a basic structure which does not have a bonding layer 110 and is manufactured by means of integral molding.

### (Method of manufacturing a catalyst supporter)

Next, a method of manufacturing a catalyst supporter according to the present invention is described. Additionally, a method of manufacturing a catalyst supporter according to the present invention is described as for an example of "a bonding-type honeycomb structure" in the following descriptions. However, a "one unit-type honeycomb structure" can also be manufactured by similar processes except for a process of bonding honeycomb units by interposing a bonding layer.

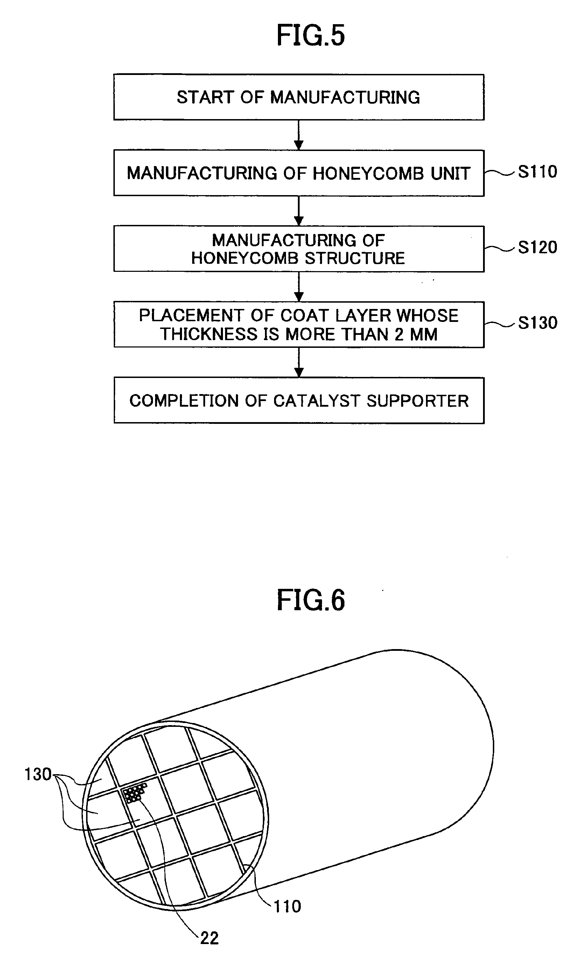

Fig. 5 shows one example of a flow of manufacturing a catalytic supporter according to the present invention. The method of manufacturing a catalyst supporter according to the present invention has all of a process of manufacturing a honeycomb unit (step S110), a process of manufacturing a honeycomb structure (step S120), and a process of placing a coat layer (step S130).

All of these processes are described in order, below.

### (Process of manufacturing a honeycomb unit)

In step S110, for example, a square-pillar-shaped honeycomb unit as shown in Fig. 2 is manufactured.

First, for example, extrusion molding is conducted by using a raw material paste based on the above-mentioned inorganic particles, inorganic fibers and/or whisker and inorganic binder so as to manufacture a molded body of a honeycomb unit. Beside these, an organic binder, a dispersive medium, and a molding auxiliary may be added into the raw material paste appropriately depending on the moldability thereof. The organic binder is not particularly limited, and for example, there can be provided one or more kinds of organic binders selected from, for example, methylcellulose, carboxymethylcellulose, hydroxyethylcellulose, polyethylene glycol and the like. The blending quantity of an organic binder is preferably 1 to 10 parts by weight per 100 parts by weight of the total of the inorganic particles, inorganic fibers and/or whisker and inorganic binder. The dispersive medium is not particularly limited, and there can be provided, for example, water, organic solvents (such as benzene), alcohols (such as methanol) and the like. The molding auxiliary is not particularly limited and there can be provided, for example, ethylene glycol, dextrin, fatty acids, fatty acid soaps, polyalcohols and the like.

The raw material paste is not particularly limited and mixing or kneading is preferable, wherein, for example, mixing may be conducted by using, for example, a mixer, Atliter or the like, or sufficient kneading may be conducted with a kneader or the like. The method for molding a raw material paste is not particularly limited, and for example, it is preferable to mold it into a shape having a cell, by means of, for example, extrusion molding.

Then, it is preferable to dry an obtained molded body. A dryer used for the drying is not particularly limited and there can be provided, for example, microwave dryers, hot air dryers, dielectric dryers, reduced-pressure dryers, vacuum dryers, freeze dryers and the like. Also, it is preferable to degrease an obtained molded body. The conditions of the degreasing are not particularly limited and are appropriately selected depending on the quantity of kind of an organic material contained in the molded body, wherein 400 °C and 2 hours are generally preferable. Furthermore, it is preferable to fire an obtained molded body. The condition of the firing is not particularly limited and 600 to 1,200 °C are preferable, in which 600 to 1,000 °C are more preferable. The reason is that if the firing temperature is less than 600 °C, sintering of the inorganic particles, etc., does not proceed so as to reduce the strength of a honeycomb structure, and if it is more than 1,200 °C, sintering of the inorganic particles, etc., proceeds excessively so as to reduce to the specific surface area which is one per unit volume thereof. A honeycomb unit having plural cells can be obtained through these processes.

### (Process for manufacturing a honeycomb structure)

Then, in step S120, a honeycomb structure is manufactured in which the plural honeycomb units described above are bonded to one another.

In this process, after a paste for bonding layer which later becomes a bonding layer is applied on the side surfaces of the honeycomb unit to have a uniform thickness thereof, another honeycomb unit is stacked sequentially by interposing the paste for bonding layer. A honeycomb structure with a desired size (for example, four honeycomb units are arrayed for each of vertical and horizontal ones) is manufactured by repeating the process.

The paste for bonding layer is not particularly limited, and there can be used, for example, a blend of an inorganic binder and inorganic particle(s), a blend of an inorganic binder and inorganic fiber(s), and a blend of an inorganic binder, inorganic particle(s) and inorganic fiber(s). Also, an organic binder may be added into these seal materials. The organic binder is not particularly limited, and there can be provided, for example, one or more kinds selected from polyvinyl alcohol, methylcellulose, ethylcellulose, carboxymethylcellulose and the like.

It is preferable that the thickness of a bonding layer for bonding the honeycomb units is 0.3 to 2 mm. If the thickness of a bonding layer is less than 0.3 mm, a sufficient bonding strength may not be obtained. Also, the bonding layer is a part which does not function as a catalyst supporter, and therefore, if its thickness is more than 2 mm, the specific surface area of a honeycomb structure is reduced which is one per unit volume thereof. Also, if the thickness of a bonding layer is more than 2 mm, the pressure loss thereof may be increased. Additionally, the number of honeycomb units to be bonded can be appropriately determined depending on the size of a honeycomb structure.

Then, the honeycomb structure is heated so that the paste for bonding layer is dried and hardened so as to form a bonding layer and the honeycomb units are fixed to one another.

Then, the honeycomb structure is cut and processed into, for example, a cylindrical shape by using, for example, a diamond cutter or the like, so as to manufacture a cylindrical honeycomb structure.

Additionally, as shown in Fig. 6, the honeycomb units 130 may be molded to have, for example, a fan-shaped cross section or a square-shaped cross section and these may be bonded so as to have a predetermined shape (cylindrical shape in Fig. 6) of a honeycomb structure while the cutting and polishing process may omitted.

### (Process of placing a coat layer)

Then, in step 130, a coat layer is formed on the peripheral portion of the honeycomb structure.

The coat layer is formed by placing a paste for coat layer on the peripheral portion of the honeycomb structure and subsequently drying and hardening it.

Usually, one similar to the above-mentioned raw material paste for a honeycomb unit is used for the paste for coat layer and the paste for coat layer contains an inorganic particle(s), an inorganic fiber(s), and an inorganic binder. Also, an organic binder may further be added to the paste for coat layer. For the organic binder, there can be used, for example, polyvinyl alcohol, methylcellulose, ethylcellulose, carboxymethylcellulose and the like, and there may be used singularly or two or more kinds of them may be mixed and used. Among the organic binders, carboxymethylcellulose is desirable.

Additionally, in the conventional method, a coat layer is formed by applying the above-mentioned paste for coat layer on the peripheral portion of a honeycomb structure by using application means such as a spatula and subsequently drying and hardening the paste. However, according to such a method, it is difficult to form a coat layer with a thickness more than 2 mm uniformly. This is because when the raw material paste has a certain thickness or greater, it is very difficult to apply the raw material paste uniformly while the form of the raw material paste is kept, since the raw material paste has a certain fluidity. For example, when a raw material paste has a thickness greater than a certain one, the raw material paste at a portion which contacts application means, simply flows to portions around it even if a further raw material paste is superposed on the surface, and it is very difficult to further increase the thickness of the raw material paste at an intended position. Furthermore, the raw material paste moves to an undesired portion due to the flow of the raw material paste from such a portion contacting application means to the peripheral portion, and consequently, a problem is caused such that the thickness of the raw material paste is significantly non-uniform.

Therefore, in the conventional and typical coat layer, the thickness thereof is controlled to approximately 1 mm at most. Also, since the coat layer is thus thin, the contribution of the coat layer itself to an increase of the strength of a catalyst supporter is low, and in the conventional catalyst supporter, a coat layer is placed solely for the purpose of adjusting the peripheral shape of a honeycomb structure (for example, of increasing the circularity of the cylindrical).

On the other hand, in the present invention, a coat layer with a thickness more than 2 mm (which is referred to as a "thick film coat layer" below. Also, a paste for coat layer placed on the peripheral surface of a honeycomb structure in order to form a "thick film coat layer" is referred to as a "paste for thick film coat layer".) can be formed uniformly which can contribute to an increase of the strength of a catalyst supporter according to a method shown below. One example of a method of forming a "thick film coat layer" uniformly is described in detail below.

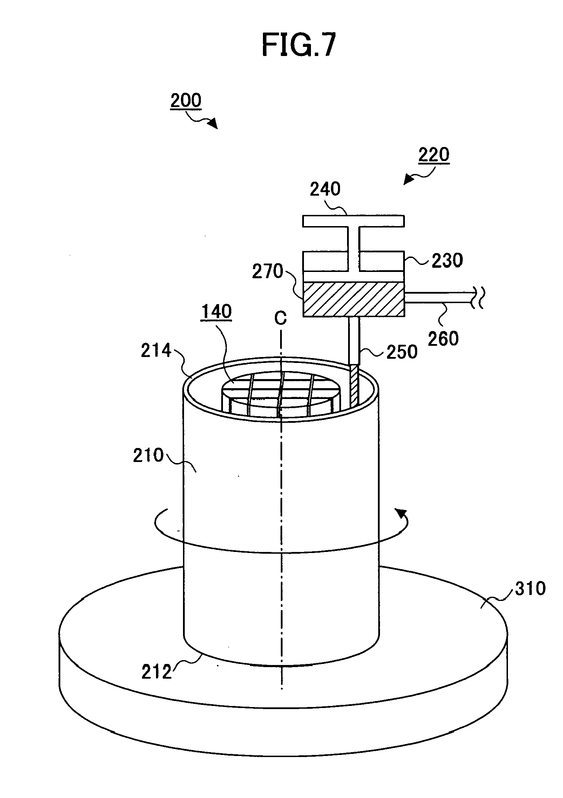

Fig. 7 shows a schematic diagram of a placement device 200 for placing a "paste for thick film coat layer" on the peripheral surface of a honeycomb structure.

As shown in Fig. 7, a placement device 200 has a cylindrical injection container 210, a paste supplier 220, and a mount 310.

The cylindrical injection container 210 has a bottom face 212 and a top face 214. In Fig. 7, the top face 214 is an aperture side. Additionally, the top face 214 may be a closed face in which at least a nozzle portion is opened. The inner diameter of the cylindrical injection container 210 is at least 4 mm more than compared to the outer diameter of a honeycomb structure 140. The honeycomb structure 140 can be inserted into the inside of the cylindrical injection container 210 from the side of the upper face 214. Additionally, the full length of the cylindrical injection container 210 is substantially equal to the full length of the honeycomb structure 140.

The cylindrical injection container 210 is placed on the mount 310 such that the bottom face 212 contacts the surface of the mount 310. It is desirable that the mount 310 has revolving means capable of revolving the cylindrical injection container 210 around a longitudinal axis C thereof.

The paste supplier 220 has a paste container chamber 230, paste extruding means 240, a nozzle 250, and a pipe 260. The paste supplier 220 is connected to a storage device (not shown in the figure) in which a raw material paste for coat layer is stored, via the pipe 260. Additionally, for example, a stop valve (not shown in the figure) may be placed on the pipe 260. A paste 270 supplied from the storage device (not shown in the figure) through the pipe 260 is contained in the paste container chamber 230. Also, the nozzle 250 is provided on the bottom face of the paste supplier 220 and the nozzle 250 communicates with the paste container chamber 230. The nozzle 250 may be a singular one or plural ones. Although the form and size of the head of the nozzle 250 are not particularly limited, the shape and size of the head of the nozzle 250 are determined such that the nozzle is not clogged with a paste in flowing of the paste. For example, when the viscosity of a paste is higher, the shape of the head is determined to have a larger size, and when the viscosity thereof is lower, the shape of the head may be determined to be a smaller size. Also, the paste extruding means 240 are arranged above the paste container chamber 230, and when the paste 270 is contained in the paste container chamber 230, they are arranged to contact the upper surface of the paste 270. A stop valve (not shown in the figure) may be provided between the nozzle 250 and the bottom face of the paste supplier 220.

The paste supplier 220 is placed above the cylindrical injection container 210 and in a configuration with respect to the cylindrical injection container 210 such that the head of the nozzle is oriented toward the space provided between the inside surface of the cylindrical injection container 210 and a honeycomb structure 140 inserted into the inside of the cylindrical injection container 210.

When a thus configured placement device 200 is used, a "paste for thick film coat layer" can be placed on the peripheral surface of a honeycomb structure as follows.

First, the cylindrical injection container 210 in which a honeycomb structure is inserted into the inside thereof is arranged on the mount 310 such that the bottom face 212 of the cylindrical injection container 210 contacts the surface of the mount 310. Additionally, the honeycomb structure in the cylindrical injection container 210 is arranged to be concentric with the cylindrical injection container 210. Therefore, when a honeycomb structure is placed, well-known positioning means such as a marker and a spacer may be used according to need. Then, the cylindrical injection container 210 is revolved around the longitudinal axis C thereof by revolving means provided on the mount 310.

On the other hand, the raw material paste 270 for coat layer is supplied from the storage device (not shown in the figure) into the paste container chamber 230 of the paste supplier 220 through the pipe 260 by, for example, opening the stop valve (not shown in the figure).

Then, for example, the stop valve is opened which is placed between the nozzle 250 and the paste supplier 220. Furthermore, as a pressure is applied from the paste extruding means 240 to the paste container chamber 230 under this condition, the raw material paste 270 contained in the paste container chamber 230 is extruded so that the raw material paste 270 is emitted from the head of the nozzle 250 and the emitted raw material paste 270 fills the space whose shape is defined between the cylindrical injection container 210 and the honeycomb structure 140.

Then, the supply of the raw material paste from the paste supplier 220 is stopped at the time when the fluid surface of the raw material paste reaches the top face of the cylindrical injection container 210.

Subsequently, a "thick film coat layer" for which the raw material is hardened is formed by subjecting the cylindrical injection container 210 to drying and hardening processes while the space between the cylindrical injection container 210 and the honeycomb structure 140 is filled with the raw material paste 270. The drying and hardening processes are conducted by, for example, keeping the cylindrical injection container 210 under the above-mentioned condition at a temperature of 80 °C to 150 °C for 10 minutes to 10 hours.

Finally, a honeycomb structure with a peripheral surface on which a "thick film coat layer" with a uniform thickness is placed can be obtained by removing the cylindrical injection container 210. Additionally, in order to facilitate the removal of the cylindrical injection container 210 from the honeycomb structure 140, a treatment for controlling the surface roughness thereof to be small (for example, a diamond polishing process) may have been applied to the inside surface of the cylindrical injection container 210 preliminarily or a surface treating agent for reducing a frictional force and/or affinity with the paste may have been placed on the inside surface. Also, the injection container 210 may have a dual-partitioning structure.

In such a method, a "thick film coat layer" with a desired thickness thereof can easily be placed on the peripheral surface of the honeycomb structure 140 by changing the inner diameter size of the cylindrical injection container 210.

Additionally, the above-mentioned placement device is one example for placing a "thick film coat layer" in the present application and it should be obvious for a person skilled in the art that a part of the configuration of the device may be modified or a part of the processes may be modified. For example, the mount 310 may have none of revolving means of the cylindrical injection container 210 in the above-mentioned placement device 200. Also, degreasing at 600 °C to 800 °C may be conducted for eliminating organic components.

Then, a catalyst is supported on a cell wall of a honeycomb structure manufactured as described above. The material of a catalyst is not particularly limited, and for example, noble metals such as platinum, palladium, and rhodium can be provided. Also, a compound may be supported which contains, for example, an alkali metal, an alkali earth metal, a rare earth element, a transition metal or the like. As a method for placing a platinum catalyst, for example, a method of impregnating a honeycomb unit on which a catalyst supporting layer is placed with, for example, a solution of diamminedinitroplatinum in nitric acid ([Pt(NH₃)₂(NO₂)₂] HNO₃) or the like and heating it is utilized.

Additionally, in the above-mentioned example of manufacturing method, although the process for supporting a catalyst is conducted after placing a coat layer on the peripheral portion of a honeycomb unit, it may be conducted before stacking honeycomb units.

A catalyst supporter in which a catalyst is supported on a cell wall is manufactured through processes as described above.

The feature(s) of the present invention will further be described by practical example(s) below.

### [Example 1]

### [Manufacturing of a catalyst supporter]

First, 1,575 parts by weight of γ-alumina, 657 parts by weight of zeolite, 680 parts by weight of aluminum borate whisker, 2,600 parts by weight of a silica sol (solid content: 30 % by weight), 320 parts by weight of methylcellulose, 225 parts by weight of a plasticizer (glycerin), and 290 parts by weight of a lubricant (Unilube) were mixed and kneaded to obtain a mixture composition. Then, the mixture composition was subjected to extrusion molding by using an extruder to obtain a molded body of a honeycomb unit.

Then, the molded body was dried sufficiently and kept at 400 °C for 2 hours to degrease it, by using a microwave dryer and a hot air dryer. Subsequently, firing was conducted by keeping it at 800 °C for 2 hours so as to obtain a honeycomb unit with a square-pillar shape (37 mm × 37 mm × 150 mm) in which the shape of the cross section of a cell was generally square, the density of the cell was 93/cm² (600 cpsi), and the thickness of the cell was 0.2 mm.

Then, 29 % by weight of γ-alumina particles (average particle diameter: 2 µm), 7 parts by weight of silica-alumina fibers (average fiber diameter: 10 µm, average fiber length: 100 µm), 34 % by weight of a silica sol (solid content: 30 % by weight), 5 % by weight of carboxymethylcellulose, and 25 % by weight of water were mixed to prepare a paste for bonding layer. The paste for bonding layer was applied on the side surfaces of the honeycomb units uniformly and the honeycomb units were bonded to one another so that a honeycomb structure was manufactured in which the four honeycomb units were bonded for each of vertical and horizontal one. Subsequently, the honeycomb structure was dried and hardened at 120 °C. The thickness of the bonding layer was 1.0 mm.

Then, the honeycomb structure was cut into a cylindrical shaped one (diameter: 136.6 mm) by using a diamond cutter.

Then, a thick film coat layer was formed on the peripheral surface of the honeycomb unit by using the above-mentioned placement device 200 and method. A paste for coat layer with a composition similar to that of the above-mentioned paste for bonding layer was used. The temperature for drying and hardening the paste was 120 °C and the degreasing condition was 700 °C for 2 hours. The thickness of the coat layer was generally uniform in the directions of the full length of the honeycomb structure and was 3.6 mm.

In accordance with such processes, a catalyst supporter according to example 1 was obtained (diameter: 143.8 mm × length: 150 mm).

### [Example 2]

In accordance with a method similar to the case of example 1, a catalyst supporter with an outer diameter of 143.8 mm was manufactured. However, in example 2, the thickness of a coat layer was 5.2 mm.

### [Comparative example 1]

In accordance with a method similar to the case of example 1, a catalyst supporter with an outer diameter of 143.8 mm was manufactured. However, in comparative example 1, a coat layer was applied on a honeycomb structure by a conventional method, that is, a method of extending a paste for coat layer over the entire of the peripheral surface of the honeycomb structure by using a spatula. The thickness of the coat layer was 0.4 mm.

### [Comparative example 2]

In accordance with a method similar to the case of comparative example 1, a catalyst supporter with an outer diameter of 143.8 mm was manufactured. However, in comparative example 2, the thickness of a coat layer was 1.2 mm.

### [Comparative example 3]

In accordance with a method similar to the case of comparative example 1, a catalyst supporter was manufactured. However, in comparative example 3, the thickness of a coat layer was 2.0 mm.

### [Measurement of isostatic strength]

Isostatic strength was measured by using catalyst supporters according to examples 1 and 2 and comparative examples 1 to 3 which were manufactured as described above.

The isostatic strength was measured as follows. Metal plates (aluminum plates, thickness: 15 mm) with a size which is slightly larger than both aperture planes of the catalyst supporter were placed on the aperture sides. Then, an integrated object of the catalyst supporter and metal plates was covered and sealed with a urethane rubber sheet (thickness: 2 mm). Then, the integrated object covered with the urethane rubber sheet was completely dipped into water contained in a container. Under this condition, while the hydraulic pressure was increased, a hydraulic pressure at which the catalyst supporter was caused to be broken was measured.

The results of the isostatic strength obtained for respective catalyst supporters were summarized and shown in Table 1. Also, Fig, 8 shows the relationship between the thickness of a coat layer of the catalyst supporter and the isostatic strength.

**Table 1.**

| | Coat layer thickness (mm) | Isostatic strength (MPa) |
|---|---|---|
| Example 1 | 3.6 | 1.64 |
| Example 2 | 5.2 | 2.45 |
| Comparative example 1 | 0.4 | 1.20 |
| Comparative example 2 | 1.2 | 1.29 |
| Comparative example 3 | 2.0 | 1.36 |

From these results, it can be seen that the isostatic strength of the catalytic supporter according to example 1 or 2 in which the thickness of a coat layer was 3.6 mm or more was higher than that of the catalytic supporter according to any of comparative examples 1 to 3 in which the thickness of a coat layer was 2.0 mm or less. Also, it can be seen that the greater the thickness of a coat layer was, the higher the isostatic strength was.

Thus, catalyst supporters having a high isostatic strength could be obtained in the present examples.

Although the embodiment(s) and specific example(s) of the present invention have been specifically described above, the present invention is not limited to the embodiment(s) or specific example(s) and the embodiment(s) and specific example(s) of the present invention can be altered or modified without departing from the spirit and scope of the present invention.

## Claims

1. A catalyst supporter having a honeycomb structure whose cells extending in longitudinal directions thereof are partitioned by a cell wall, and a coat layer placed on a peripheral portion of the honeycomb structure, **characterized in that** a thickness D of the coat layer is within a range of 2 mm < D ≤ 10 mm.

2. The catalyst supporter as claimed in claim 1, wherein the thickness D of a coat layer is within a range of 3 mm ≤ D ≤ 6 mm.

3. The catalyst supporter as claimed in claim 1 or 2, wherein the cell wall comprises an inorganic particle and an inorganic fiber and/or a whisker.

4. The catalyst supporter as claimed in any of claims 1 to 3, wherein the honeycomb structure has plural pillar-shaped honeycomb units and a bonding layer which bonds the honeycomb units to one another.

5. The catalyst supporter as claimed in any of claims 1 to 4, which is cylindrical shape.

6. The catalyst supporter as claimed in any of claims 1 to 5, wherein a catalyst is supported on the cell wall.

7. The catalyst supporter as claimed in claim 6, **characterized in that** the catalyst includes platinum.

8. A method of manufacturing a catalyst supporter which has a honeycomb structure whose cells extending in longitudinal directions thereof are partitioned by a cell wall and a coat layer placed on a peripheral portion of the honeycomb structure, which comprises
a step of preparing plural pillar-shaped honeycomb units,
a step of bonding the plural pillar-shaped honeycomb units by interposing a bonding layer to manufacture the honeycomb structure, and
a step of placing a raw material paste for coat layer, on a peripheral portion of the honeycomb structure, and drying and hardening the raw material paste for coat layer to form a coat layer whose thickness D is within a range of 2 mm < D ≤ 10 mm,
**characterized in that**
the step of forming a coat layer whose thickness D is within a range of 2 mm < D ≤ 10 mm has a step of placing a housing which covers a peripheral surface of the honeycomb structure, at an outside of the honeycomb structure, and filling a space whose shape is defined between the housing and the peripheral surface of the honeycomb structure with the raw material paste.
